# EUROPÄISCHE PATENTSCHRIFT

(11) **EP 2 827 513 B1**
(45) Veröffentlichungstag und Bekanntmachung des Hinweises auf die Patenterteilung: **20.09.2017**
(21) Anmeldenummer: 14159440.8
(22) Anmeldetag: 13.03.2014
(51) Int. Cl.: H04B 10/114, B64D 11/00, G02B 5/08, G02B 5/26, H04B 1/04

(54) **Datennetz in einer Passagierkabine zur Anbindung von elektronischen Endgeräten**
Data network in a passenger cabin for connection of electronic end devices
Réseau de données dans une cabine de passagers pour la connexion de terminaux électroniques

(30) Priorität: 28.03.2013 DE 102013103188
(43) Veröffentlichungstag der Anmeldung: 21.01.2015
(73) Patentinhaber: Deutsche Telekom AG, 53113 Bonn (DE)
(72) Erfinder: Preußler, Stefan, 01612 Nünchritz (DE); Grigat, Michael, 64372 Ober-Ramstadt (DE); Schneider, Thomas, Dr. rer. nat., 14552 Michendorf (DE); Braun, Ralf-Peter, Dr., 12305 Berlin (DE)
(74) Vertreter: Braun-Dullaeus Pannen Patent- und Rechtsanwälte

(56) Entgegenhaltungen:
- DE-A1- 10 107 538
- DE-A1-102008 020 466
- DE-B4-102004 040 837
- "DIN 5031-7:1984-01: Strahlungsphysik im optischen Bereich und Lichttechnik; Benennung der Wellenlaengenbereiche", DEUTSCHE NORMEN. DIN NORM,, 1 January 1984 (1984-01-01), XP009156264,

## Beschreibung

Die Erfindung betrifft ein Datennetz in einer Passagierkabine zur insbesondere hochbitratigen Anbindung von elektronischen Endgeräten.

Die DE 20 2011 076 357 A1 offenbart ein Netzwerk für Luft- und Raumfahrzeuge. Demnach besteht bei Flugzeugen stets der Bedarf, den Verkabelungsaufwand und damit die Komplexität des Kabelbaums im Hinblick auf Kosten und Gewicht so gering wie möglich zu halten. Die DE 10 2008 020 466 A1 offenbart ein Datennetz zur drahtlosen Datenübertragung mit Terahertz-Wellen, wobei die vom Sendemittel ausgesandte Trägerwelle mittels eines automatischen Justiersystems auf das Empfangsmittel ausgerichtet wird.

Die DE 101 07 538 A1 offenbart ein optisches Freiraumkommunikationssystem zur breitbandigen Übertragung von hochratigen Daten. Beim Betrieb des Kommunikationssystems wird moduliertes Licht auf eine Fläche gestrahlt und gelangt auf indirektem Wege zu den Empfängern, die beispielsweise an den Sitzpositionen im Innenraum eines Flug- oder Fahrzeugs angeordnet sind.

Eine Verwendung der WLAN-Technologie, die bereits erfolgreich in Zügen und Flugzeugen eingesetzt wird, ist aber aus Sicherheitsgründen im Flugverkehr nur unter gewissen Auflagen möglich. Insbesondere reichen die über WLAN möglichen Datenübertragungsraten insbesondere in der voranging benutzten Downloadrichtung nicht aus, sämtliche Sitzplätze mit dem Angebot des Unterhaltungsprogramms zu versorgen. Insofern werden selbst in Flugzeugen, die mit WLAN ausgestattet sind, die Monitore des bordeigenen Unterhaltungssystems aufwändig kabelgebunden an einen zentralen Server angeschlossen.

Dieses Problem erkennt auch die DE 10 2004 040 837 A1 Darin wird auch festgestellt, dass in Flugzeugen Grenzwerte für Funkfrequenz-Strahlungen einzuhalten sind. Die DE 10 2004 040 837 A1 kommt zu der Erkenntnis, dass über Funktechnologien es nicht möglich sein wird, eine umfassende individuelle Datenversorgung der Passagiere mit Funktechnologien zu bewältigen. Als mögliche Lösung schlägt die DE 10 2004 040 837 A1 daher ein Verfahren zur verteilten hochbitratigen Übertragung großer Digitalmengen in einer Flugzeugkabine vor. In der Flugzeugkabine ist ein Sender angeordnet, der Daten an eine Vielzahl von Empfängern überträgt, die zeitlich aber jeweils nur einem Nutzer zugeordnet sind. Die Datenübertragung erfolgt hierbei über einen Laser-Freistrahl, der über Reflektoren auf einen Empfänger umgeleitet wird.

Dieses Konzept scheint derzeit zwar hinsichtlich der Bandbreite und der elektromagnetischen Verträglichkeit sehr gute Vorraussetzungen zu schaffen; es ergeben sich dennoch Nachteile. So ist davon auszugehen, dass eine hohe Bandbreite über mehrere Meter Distanz nur über, gebündelte Laserstrahlen erreichbar ist. Diese können aber gefährlich für die Augen der Passagiere sein, zumal die Laserstrahlen frei durch die Kabine geleitet werden.

Zusätzlich sind in dem Konzept der gebündelten Laserstrahlen nur Punkt-zu-Punkt Verbindungen vorgesehen, wobei durch die drehbare Anordnung des Senders die einzelnen Empfänger zeitlich nur nacheinander angesteuert werden können. Dazu sind flexible Verbindungen mit unterschiedlichen Wegen durch die Kabine zu schalten, die bei möglichen Passagierbewegungen unterbrochen werden können.

Es ist die Aufgabe der vorliegenden Erfindung, eine hinsichtlich der erreichbaren Bandbreiten und der elektromagnetischen Verträglichkeit vergleichbare Alternative zum Konzept der DE 10 2004 040 837 A1 bereitzustellen. Die Anbindung von elektronischen Endgeräten an den Sitzen soll gegenüber herkömmlichen Methoden hinsichtlich Kosten und Gewicht optimiert sein. Es sollen insbesondere auch alle handelsüblichen Endgeräte, welche die Passagiere üblicherweise bei sich tragen, angebunden werden können. Durch die Übertragung sollen sich keine Beeinträchtigungen für die Passagiere ergeben.

Die Aufgabe wird gelöst durch ein Datennetz nach Anspruch 1; bevorzugte Ausgestaltungen ergeben sich aus den Unteransprüchen.

Der Kern der Erfindung liegt insbesondere darin, den enormen Verkabelungsaufwand, der durch die Anbindung der elektronischen Endgeräte in der Passagierkabine erforderlich wird, dadurch zu reduzieren, dass eine Terahertzwelle für die Übertragung der Daten verwendet wird. Die Terahertzwelle ist insbesondere eine gebündelte Terahertzwelle. Die Terahertzwelle kann von einer Sendestation, die beispielsweise im vorderen Bereich der Passagierkabine angeordnet ist, einmal längs durch die gesamte Passagierkabine geführt werden. Durch geeignete Abzweigfilter wird ein Anteil der Terahertzwelle zu den Sitzterminals abgezweigt. Insbesondere können die Abzweigfilter als Reflektoren ausgebildet sein, die zumindest einen Teil der Terahertzwelle in Richtung der Sitzterminals ablenken. Die Sitzterminals können dann eine Empfangsstation für die Terahertzwellen darstellen. Um dennoch es zu ermöglichen, dass alle handelsüblichen Endgeräte der Passagiere an das Datennetz angeschlossen werden können, erfolgt der Anschluss der Endgeräte eben nicht unmittelbar an die Terahertzwelle, sondern insbesondere kabelgebunden (z.B. mittels Netzwerk- oder USB-Kabel) über die Sitzterminals.

Im Wesentlichen kann jedem Sitz ein Sitzterminal zugewiesen sein. Es ist aber möglich, dass mehrere Sitze demselben Sitzterminal zugewiesen sind. So bietet es sich beispielsweise an, eine Gruppe von Sitzen derselben Reihe und derselben Gangseite einem gemeinsamen Sitzterminal zuzuordnen. Die dann noch verbleibende Verkabelung zwischen dem Sitzterminal und dem Endgerät ist dann recht gering. Es wird also die recht lange Verkabelung zwischen den Sitzen und dem zentral angeordneten Server deutlich reduziert. Hierdurch kann eine enorme Einsparung im Verkabelungsaufwand erzielt werden, was eine unmittelbare Gewichtsreduzierung bewirkt. Die Versorgung über die Terahertzwelle stellt dabei aber keinen WLAN-Ersatz dar, welcher dafür geeignet wäre, die Endgeräte drahtlos anzubinden. Vielmehr ist die Terahertzwelle dazu vorgesehen, die Datenverbindung zunächst nur in die Nähe der Endnutzer zu bringen. Die "letzte Meile" kann dann wie gehabt kabelgebunden erfolgen oder auch über bereits vielseitig eingesetzte drahtlose Verbindungstechniken, wie z.B. Bluetooth, aber eben nicht über die Terahertzwelle. So ist es auch möglich, nicht terahertzfähige Endgeräte der Passagiere anzubinden. Ebenso können weiterhin ganz "normale" Monitore verwendet werden, die dem bordeigenen Unterhaltungssystem zugeordnet sind und insbesondere zum Anzeigen von Spielfilmen gedacht sind.

Ein Vorteil bei der Verwendung der Terahertzwelle liegt also in der erheblichen Einsparung des Verkabelungsaufwandes. Gegenüber einer üblichen WLAN-Verbindung weist dabei die Terahertzverbindung einige Vorteile auf. Die Verwendung der insbesondere gebündelten Terahertzwelle schafft keine Probleme hinsichtlich der elektromagnetischen Verträglichkeit (EMC) verglichen mit WLAN. Ferner ist die Terahertzwelle auch dazu geeignet, enorme Menge an Daten zu übertragen. So ist es mithilfe der Terahertzwelle nicht nur möglich, eine Internetversorgung zu den Mobiltelefonen oder Laptops der Passagiere herzustellen, sondern auch das vollständige Datenaufkommen des gesamten bordeigenen Unterhaltungssystems zu den Sitzen zu übernehmen. Dies ist über das herkömmliche WLAN nicht möglich. So kann über eine Terahertzwelle in etwa einer Sekunde der Inhalt einer gesamten DVD übertragen werden. Durch die enorme Übertragungskapazität lassen sich problemlos hochbitratige high-definition (HD) Inhalte an alle Sitzterminals und damit auch an alle Sitzmonitore verteilen.

Entgegen der in der DE 10 2004 040 837 A1 geäußerten Feststellung benutzt die vorliegende Erfindung nun doch eine Funktechnologie. Gegenüber einem gebündelten Laserstrahl stellt die Terahertzwelle keine Gefährdung der Augen der Passagiere dar. Zugleich ist aber die Bandbreite vergleichbar mit derjenigen, die über die optische Übertragungsstrecke möglich sind. Der Aspekt der elektromagnetischen Verträglichkeit ist bei der Terahertzurelle ebenfalls als unkritisch zu bewerten. Zusätzlich können bei der THz Welle gleichzeitige Verbindungen zu mehreren Empfängern hergestellt werden. Dabei werden feste Übertragungswege genutzt die Passagierbewegungen zulassen. Ferner sind bei der THz Anwendung feste Übertragungswege möglich, die nicht flexibel durch den Raum der Passagierkabine geführt werden müssen und unabhängig von Passagierbewegungen sind. Außerdem sind bei der THz Anwendung auch Punkt-zu-Multipunkt Verbindungen unter Verwendung von Abzweigfiltern oder Reflektoren vorgesehen, so dass Übertragungen zu mehreren Empfängern gleichzeitig durchgeführt werden können.

Als Terahertzwelle wird eine Trägerwelle mit einer Trägerfrequenz von zumindest 300 GHz verstanden. Besonders geeignet erscheint für die Erfindung der Frequenzbereich ab 1 THz bis 10 THz zu sein. Es können z.B. orthogonale Polarisationsebenen abgestrahlt werden, z.B. horizontal und vertikal, um die Kapazität bzw. Aufspaltung der Wellen zu erhöhen. Zusätzlich können auch mehrere Terahertzwellen von einer Basisstation aus ausgestrahlt werden. Dies kann durch eine Antenne, oder auch durch mehrere Antennen z.B. auch auf derselben oder auf verschiedenen THz-Frequenzen erfolgen. Unter einer hochbitratigen Datenverbindung werden Übertragungsraten von insbesondere zumindest 40 Gbit/s, vorzugsweise zumindest 100Gbit/s verstanden.
Die Terahertzwelle kann dabei parallel zur Längserstreckung der Kabine gesendet werden. Es kann ein Strahlkanal vorgesehen sein, der sich beispielsweise im Bereich der oberen Gepäckablagen oder auch im Dachhimmel der Passagierkabine befindet. In einem solchen Strahikanal können ferner seitliche Reflektoren angebracht sein, die die Strahlung führen. Eine Ablenkung erfolgt dann insbesondere nach unten durch die Reflektoren. Die Ablenkung nach unten muss aber nicht exakt vertikal sein. Die Abzweigfilter können aber selbst auch Empfangeinheiten darstellen, die zumindest Teile der Terahertzwelle in elektronische Daten umwandeln können.

In einer ersten Ausgestaltung ist vorgesehen, dass die Abzweigfilter, die den jeweiligen Sitzterminals zugewiesen sind, insbesondere hintereinander angeordnet sind und die Funktion eines Richtkoppler ausführen. Dabei werden Teile der Terahertzwelle (z.B. 5% der Strahlungsenergie) frequenzunabhängig abgezweigt, während der übrigen Teil der Terahertzwelle (z.B. 95% der Strahlungsenergie) unverändert zum nächsten Abzweigfilter durchgelassen wird. So kann die Terahertzwelle stets zu allen ihr zugeordneten Sitzterminals zugleich hin ausgestrahlt werden. Durch eine solche Teildurchlässigkeit wird stets ein gewisser Anteil aus der gesamten Terahertzwelle abgezweigt und je einem Sitzterminal zur Verfügung gestellt.

In einer zweiten Ausgestaltung sind die Abzweigfilter entlang der THz-Wellenausbreitung frequenzselektiv ausgestaltet werden. Dabei wird insbesondere die volle Energie eine Frequenzbereichs abgezweigt, während die Terahertzwelle in den übrigen Frequenzbereichen vollständig durchgelassen wird. Die an den Sitzterminals ankommende Empfangsleistung kann so erhöht werden.

Insbesondere bei der ersten und der zweiten Ausgestaltung wird bevorzugt die gebündelte Terahertzwelle ausschließlich in einer starr vorgegebenen Richtung ausgesendet. Dies ermöglicht das Festlegen von einigen wenigen vorgegebenen Strahlkorridoren, die freigehalten werden können von Hindernissen. Der Strahlkorridor kann zumindest abschnittsweise in einer geradlinigen Rohrleitung angeordnet sein. Der Strahlkorridor kann, insbesondere unzugänglich, in der Verkleidung der Passagierkabine gebildet sein. Solche Strahlkorridore können bevorzugt so festgelegt werden, dass kein Passagier versehentlich in den Strahlenkorridor hineinragen kann und so die Datenverbindung unterbricht. Ferner kann so der Server stets mit aiten Sitzterminals gleichzeitig in Funkkontakt bleiben.

In einer dritten Ausgestaltung sind die Abzweigfilter etwas versetzt zueinander angeordnet, so dass diese eben nicht exakt auf einer Strahlrichtung angeordnet sind. Die Terahertzwelle wird von der Sendeeinrichtung ein wenig abgelenkt und exakt zu einem Abzweigfilter geleitet, der dem entsprechenden Ziel-Sitzterminal zugeordnet ist. Diese Variante hat den Vorteil, dass stets die volle Leistung und das volle Frequenzspektrum der Terahertzwelle zu einem Sitzterminal gelangen kann; es reicht eine geringere Sendeleistung aus, um die Daten zum Sitzterminal zu befördern.

Die ersten bis dritten Ausgestaltungen können auch gemeinsam in einer Kabine zur Anwendung kommen.

Die Erfindung wird anhand der Figuren nachfolgend näher erläutert. Hierin zeigt
- Figur 1: die Seitenansicht einer Flugzeugkabine schematisch mit einem erfindungsgemäßen Datennetz;
- Figur 2: die Draufsicht auf die Flugzeugkabine nach Figur 1.

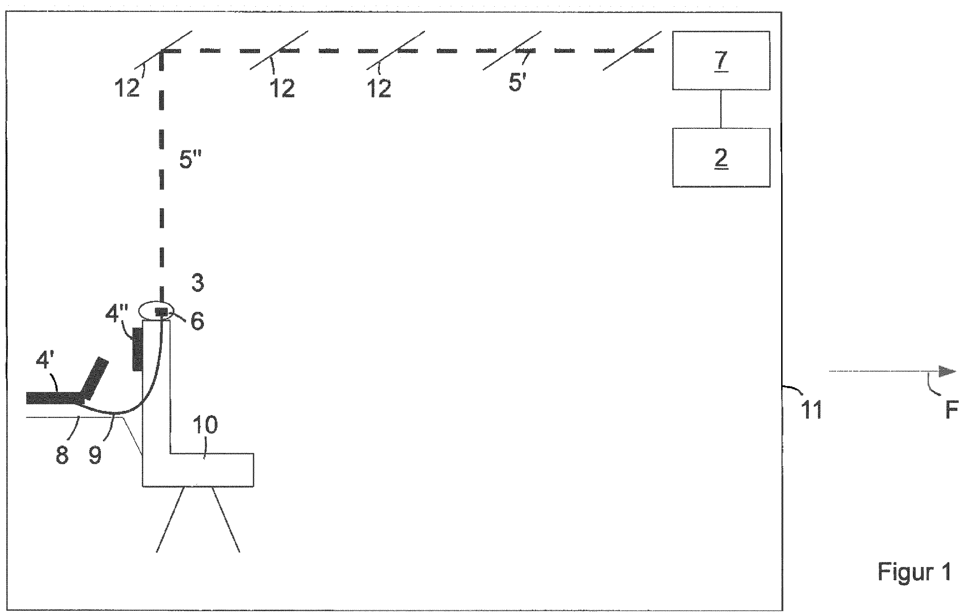

In Figur 1 ist eine Flugzeugkabine 11 mit einem erfindungsgemäßen Datennetz 1 gezeigt. In dieser Flugzeugkabine 11 sind eine Vielzahl von Sitzen 10 in Reihen und Spalten angeordnet, von denen nur beispielhaft ein einziger Sitz 10 dargestellt ist. An der Rückseite des Sitzes 10 befindet sich ein Klapptisch 8, auf dem ein Laptop 4' als elektronisches Endgerät angeordnet ist. An der Rückenlehne des Sitzes 10 ist ferner ein Monitor 4" des bordeigenen Unterhaltungssystems angeordnet. Beide elektronischen Endgeräte 4', 4" sind in Datenverbindung mit einem Sitzterminal 3. Für die Datenverbindung vom Laptop 4' zum Sitzterminal 3 ist schematisch ein Kabel 9 angezeigt, welches an eine Steckbuchse 6 des Sitzterminal 3 angeschlossen ist. Der Monitor 4" ist über eine nicht sichtbare Kabelverbindung, die im Sitz integriert ist, mit dem Sitzterminal 3 verbunden oder integral mit dem Sitzterminal ausgebildet.

Das Sitzterminal 3 ist mit einem Server 2 über eine weitere Datenverbindung verbunden. Hierzu ist eine Sendeeinrichtung 7 vorgesehen, die eine Terahertzwelle 5 ausstrahlt, die die Datenverbindung zwischen dem Server 2 und dem Sitzterminal 3 bildet. Der Server 5 sowie die Sendeeinrichtung 7 sind in einem vorderen Bereich der Kabine 11 angeordnet, beispielsweise im Bereich der Bordküche. Die Terahertzwelle 5 wird vorwiegend dazu verwendet, um die Länge der Flugzeugkabine hin zum Sitz zu überbrücken. Dafür wird ein erster Teil 5' der Terahertzwelle 5 parallel zur Längserstreckung (=Flugrichtung F) der Passagierkabine gesendet. Dieser Teil der Terahertzwelle kann durch einen frei gehaltenen horizontal angeordneten Schacht, der beispielsweise im Bereich der Gepäckablagefächer oberhalb der Passagiere angeordnet ist, gesendet werden. Damit nun die Terahertzwelle 5 zu den Sitzterminals 3 gelangt, sind oberhalb der Sitze 10 jeweils Reflektoren 12 vorgesehen, durch welche jeweils ein zweiter Teil 5" der Terahertzwelle 5 in Richtung zum Sitzterminal 3 nach unten abgelenkt wird.

Die Terahertzwelle 5 dient im Wesentlichen dazu, die komplexe Verkabelung der Flugzeugkabine 11 zu reduzieren. So stellen die Sitzterminals eine Art Subserver dar, die die am Sitz angebrachten elektronischen Endgeräte mit Daten versorgen können. Die Verbindung zwischen dem Server 2 und den Sitzterminals 3 hingegen erfolgt dann durch die Terahertzwelle. Da hierzu normalerweise notwendige Anzahl von Kabelkilometern kann so eingespart werden.

Durch die Terahertzwelle können sehr große Mengen an Daten übertragen werden. So kann beispielsweise innerhalb einer Sekunde der Inhalt einer gesamten DVD übertragen werden. Es reicht daher aus, wenn die einzelnen Sitzterminals immer nur vereinzelt für wenige Zeiteinheiten von 1 Sekunde oder sogar weniger mit dem Server verbunden werden, um mit Daten versorgt zu werden, die für eine Stunde Videodarbietung oder mehr ausreichen können. Insofern kann eine einzige Terahertzwelle ausreichen, um sämtliche Monitore des bordeigenen Unterhaltungssystems sowie die Datenversorgung der Nutzer für eine Internetverbindung sicherzustellen. Es ist nur erforderlich, dass die Terahertzwelle zu allen Sitzterminals gelangen kann.

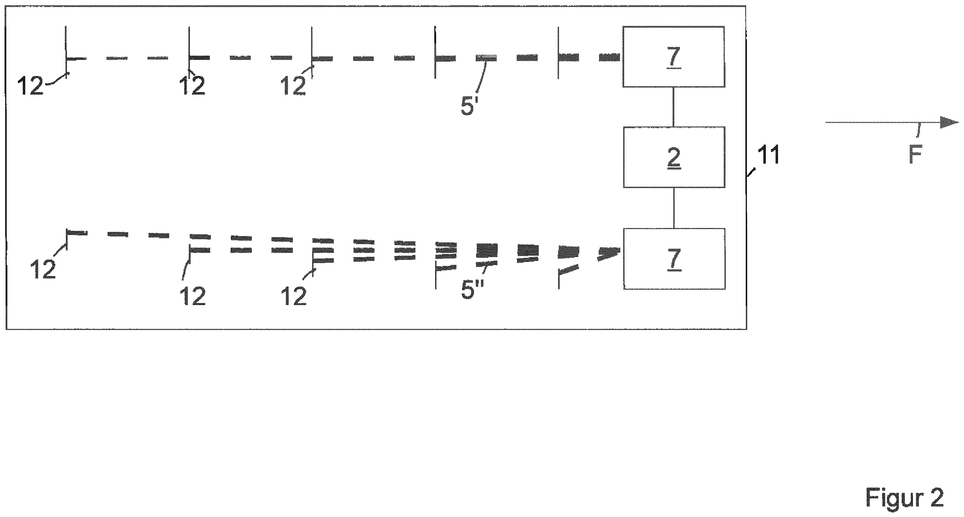

Wie in Figur 1 gezeigt sind die Reflektoren 12 an der Decke der Flugzeugkabine 11 vorgesehen, um eine Ablenkung des im Wesentlichen horizontal ankommenden Teils 5' der Terahertzwelle in einen in etwa senkrecht nach unten gerichteten Teil 5" der Terahertzwelle vorzunehmen. In Figur 2 ist dabei die Anordnung in Draufsicht gezeigt. So sind hier zwei unterschiedliche Möglichkeiten gezeigt, wie das Ablenken der horizontalen Terahertzwelle durch die Reflektoren 12 erfolgen kann. In der Variante, die oben in Figur 2 dargestellt ist, wird durch die Sendeeinrichtung 7 die Terahertzwelle horizontal entgegen der Flugrichtung F gesendet. Die einzelnen Reflektoren 12 lenken frequenzunabhängig einen Teil der Terahertzwelle nach unten ab; aber der größere Teil wird weiter durchgelassen, strahlt also weiter horizontal. Es ist anhand der sich verkleinernden Strichbreite zu erkennen, dass allerdings die Intensität der Terahertzwelle nach jedem Reflektor 12 reduziert wird. Insofern eignet sich diese Variante nur für eine begrenzte Anzahl von Reflektoren 12. Es können aber auch frequenzselektive Reflektoren verwendet. Dann wird jeweils für einen Sitzterminal ein jeweils zugehöriger Frequenzanteil aus dem Gesamtstrahl abgelenkt. Die Intensität der durchgelassenen Strahlung wird dann durch den Reflektor nicht verringert; allerdings gelangen dann nicht sämtliche Frequenzanteile zu allen Sitzterminals. Insbesondere sendet die Sendeeinrichtung 7 die gebündelten Terahertzwelle ausschließlich in einer starr vorgegebenen Richtung aus.

In einer anderen Variante, die in Figur 2 unten dargestellt ist, wird auch durch die Sendeeinrichtung 7 eine Terahertzwelle im Wesentlichen parallel zur Flugzeugkabine 11 abgestrahlt. Das Abstrahlen erfolgt aber nicht exakt parallel, sondern die Strahlen 5, die für die einzelnen Sitzterminals vorgesehen sind, sind in ihrer Winkelausrichtung leicht unterschiedlich. Durch die entsprechende Anordnung der Reflektoren 12, die ebenfalls nicht exakt auf einer Linie liegen, wird dann die Ablenkung der Terahertzwelle durch exakt denjenigen Reflektor 12 erfolgen, auf den die Terahertzwelle 5 genau ausgerichtet ist. Dafür weist die Sendeinrichtung 7 Mittel auf, die die Terahertzwelle 5 gezielt in eine bestimmte Richtung senden kann. Die Terahertzwelle ist also in ihrer Ausbreitungsrichtung exakt einstellbar. Die Einstellung der Ausbreitungsrichtung kann anhand von Reflektoren oder einstellbaren Linsen in der Sendestation 7 erfolgen.

Das Datennetz eignet sich auch für Eisenbahnwaggons als Passagierkabine.

### Bezugszeichenliste

- 1: Datennetz
- 2: Server
- 3: Sitzterminal
- 4: Endgerät (Laptop, Monitor)
- 5: Datenverbindung zwischen Sitzterminal und Server
- 6: Steckbuchse
- 7: Sendeeinrichtung
- 8: Klapptisch
- 9: Kabel
- 10: Sitz
- 11: Flugzeugkabine
- 12: Reflektor

- F: Flugrichtung

## Patentansprüche

1. Datennetz (1) in einer Passagierkabine (11) zur hochbitratigen Anbindung von elektronischen Endgeräten (4),
umfassend
einen Server (2),
eine Mehrzahl von Sitzterminals (3), an denen ein elektronisches Endgerät (4) anschließbar ist,
wobei die Sitzterminals (3) über eine Datenverbindung mit dem Server (2) verbunden sind,
wobei die Sitzterminals (3) jeweils eine Schnittstelle (6) aufweisen, an die das Endgerät (4) kabelgebunden oder drahtlos angeschlossen werden kann,
wobei die Datenverbindung zwischen dem Server (2) und dem Sitzterminal (3) eine drahtlose Datenverbindung umfasst,
**dadurch gekennzeichnet,**
**dass** die drahtlose Datenverbindung eine Trägerwelle (5) im Terahertzbereich zwischen 300 GHz und 10 THz verwendet.

2. Datennetz nach Anspruch 1,
**dadurch gekennzeichnet,**
**dass** das Endgerät einen am Sitz festinstallierten Bildschirm (4") umfasst.

3. Datennetz nach Anspruch 1,
**dadurch gekennzeichnet,**
**dass** das Endgerät ein mobiles Endgerät (4') ist, insbesondere ein Laptop, ein Tablet-PC oder ein Mobiltelefon.

4. Datennetz nach Anspruch 1,
**dadurch gekennzeichnet,**
**dass** eine drahtlose Übertragungsstrecke parallel zur Längserstreckung (F) der Passagierkabine (11) ausgerichtet ist, und dass im axialen Bereich des Sitzterminals (3) ein Abzweigfilter (12), insbesondere ein Reflektor (12), vorgesehen ist, der einen für das Sitzterminal (3) vorgesehenen Anteil (5") der Terahertzwelle zum Sitzterminal (3) abzweigt, insbesondere in Richtung des Sitzterminals (3) ablenkt.

5. Datennetz nach Anspruch 4,
**dadurch gekennzeichnet,**
**dass** das Abzweigfilter (12) frequenzselektiv ist.

6. Datennetz nach einem der Ansprüche 3 bis 5,
**dadurch gekennzeichnet,**
**dass** mehrere Abzweigfilter (12) vorgesehen sind, die hintereinander angeordneten Sitzterminals zugeordnet sind, wobei den jeweiligen Abzweigfiltern unterschiedliche Abstrahlrichtungen der Terahertzwelle (5) zugewiesen sind.

7. Datennetz nach einem der vorherigen Ansprüche,
**dadurch gekennzeichnet,**
**dass** eine Sendestation zum Aussenden der Terahertzwelle zum Sitzterminal Mittel zum Ausrichten der Terahertzwelle entsprechend der dem Sitzterminal zugeordneten Abstrahlrichtung umfasst.

## Claims

1. A data network (1) in a passenger cabin (11) for the high bit-rate connection of electronic devices (4), comprising
a server (2),
a plurality of seat terminals (3), to which an electronic device (4) can be connected,
wherein the seat terminals (3) are connected by a data connection to the server (2),
wherein the seat terminals (3) each comprises an interface (6), to which the device (4) can be connected by cable or wireless,
wherein the data connection between the server (2) and the seat terminal (3) comprises a wireless data connection,
**characterised in that**
the wireless data connection uses a carrier wave (5) in the tetraherz range between 300 GHz and 10 THz.

2. The data network according to claim 1,
**characterised in that**
the device comprises a display screen (4") permanently installed on the seat.

3. The data network according to claim 1,
**characterised in that**
the device is a mobile device (4'), in particular a laptop, a tablet PC or a mobile telephone.

4. The data network according to claim 1,
**characterised in that**
a wireless transmission link is aligned parallel with the longitudinal extension (F) of the passenger cabin (11), and **in that** a branching filter (12), in particular a reflector (12), is provided in the axial region of the seat terminal (3), which branching filter branches off, to the seat terminal (3), a component (5") of the tetraherz wave intended for the seat terminal (3), in particular deflects said component in the direction of the seat terminal (3).

5. The data network according to claim 4,
**characterised in that**
the branching filter (12) is frequency-selective.

6. The data network according to any one of claims 3 to 5,
**characterised in that**
a plurality of branching filters (12) are provided, which are assigned to the seat terminals arranged one behind the other, wherein different radiation directions of the tetraherz wave (5) are assigned to the respective branching filters.

7. The data network according to any one of the preceding claims,
**characterised in that**
a transmission station for transmitting the tetraherz wave to the seat terminal comprises means for aligning the tetraherz wave corresponding to the radiation direction assigned to the seat terminal.

## Revendications

1. Réseau de données (1) dans une cabine de passagers (11) pour la connexion à haut débit de terminaux électroniques (4), comprenant
un serveur (2)
une pluralité de terminaux de siège (3), auxquels peut être raccordé un terminal électronique (4),
dans lequel les terminaux de siège (3) sont reliés au serveur (2) par le biais d'une liaison de données,
dans lequel les terminaux de siège (3) présentent respectivement une interface (6) à laquelle peut être raccordé un terminal (4) à l'aide d'un câble ou sans fil,
dans lequel la liaison de données entre le serveur (2) et le terminal de siège (3) comporte une liaison de données sans fil,
**caractérisé en ce que**
la liaison de données sans fil utilise une onde porteuse (5) dans la plage du térahertz entre 300 GHz et 10 THz.

2. Réseau de données selon la revendication 1,
**caractérisé en ce que**
le terminal comporte un écran (4") installé fixement sur le siège.

3. Réseau de données selon la revendication 1,
**caractérisé en ce que**
le terminal est un terminal mobile (4'), en particulier un ordinateur portable, une tablette ou un téléphone mobile.

4. Réseau de données selon la revendication 1,
**caractérisé en ce que**
une ligne de transmission sans fil est orientée parallèlement à l'étendue longitudinale (F) de la cabine de passagers (11), et **en ce que** dans la région axiale du terminal de siège (3), il est prévu un filtre de dérivation (12), en particulier un réflecteur (12), lequel dévie une partie (5") de l'onde térahertz destinée au terminal de siège (3) vers le terminal de siège (3), en particulier en direction du terminal de siège (3).

5. Réseau de données selon la revendication 4,
**caractérisé en ce que**
le filtre de dérivation (12) est sélectif en fréquence.

6. Réseau de données selon l'une des revendications 3 à 5,
**caractérisé en ce que**
il est prévu plusieurs filtres de dérivation (12) attribués à des terminaux de siège placés les uns derrière les autres, où différentes directions d'émission de l'onde térahertz (5) sont affectées aux filtres de dérivation respectifs.

7. Réseau de données selon l'une des revendications précédentes,
**caractérisé en ce que**
pour l'émission de l'onde térahertz vers le terminal de siège, la station d'émission comporte des moyens permettant d'orienter l'onde térahertz en fonction de la direction d'émission attribuée au terminal de siège.
